# EUROPÄISCHE PATENTSCHRIFT

(11) **EP 0 867 627 B1**
(45) Veröffentlichungstag und Bekanntmachung des Hinweises auf die Patenterteilung: **06.10.2004**
(21) Anmeldenummer: 98104082.7
(22) Anmeldetag: 07.03.1998
(51) Int. Cl.: F16C 39/06

(54) **Magnetisch gelagerter Rotor einer Dämpfungssystem**
Magnetically supported rotors with damping system
Rotor suspendu magnétiquement avec un système d'amortissement

(30) Priorität: 26.03.1997 DE 19712711
(43) Veröffentlichungstag der Anmeldung: 30.09.1998
(73) Patentinhaber: Pfeiffer Vacuum GmbH, 35614 Asslar (DE)
(72) Erfinder: Lotz, Heinrich, 35578 Wetzlar (DE)

(56) Entgegenhaltungen:
- EP-A- 0 294 760
- EP-A- 0 768 467
- DE-A- 19 616 314
- US-A- 5 394 044

## Beschreibung

Die Erfindung betrifft einen magnetisch gelagerten Rotor mit einer Dämpfungseinrichtung nach dem Oberbegriff des ersten Patentanspruches.

Für die berührungsfreie Lagerung von schnelldrehenden Rotoren werden verschiedene Versionen von elektronisch geregelten oder mechanisch unterstützten Magnetlagem beschrieben. Allen gemeinsam ist, daß axiale und radiale Schwingungen auftreten, welche besonders beim Durchlaufen von Drehzahlen, die Resonanzstelten des Rotors kennzeichnen, zu kritischen Situationen führen können. Beim Einsatz von Magnetlagern für Rotoren, bei denen sehr enge mechanische Toleranzen eingehalten werden müssen, wie z.B. bei Turbomolekularpumpen, können solche kritische Situationen leicht zum Anlaufen von Rotoren an Statorteilen und schließlich zur Zerstörung der Einrichtung führen. Daher ist es wichtig, solche Lagerungen mit geeigneten Dämpfungselementen zu versehen, um einen sicheren und ruhigen Lauf zu gewährleisten.

Es gibt verschiedene Methoden zur Dämpfung von magnetisch gelagerten Rotoren. Hier interessieren insbesondere solche, welche auf radiale Magnetlagerelemente angewandt werden. Dabei sind Wirbelstromdämpfungen von geringerem Interesse, da sie eine schlechte Dämpfungscharakteristik aufweisen. Ansonsten haben sich Dämpfungseinrichtungen, die über ein Zwischenglied auf den Rotor einwirken, besonders bewährt. In der DE-AS 26 58 925 und in dem Buch von Pollermann: "Bauelemente der physikalischen Technik", Springer-Verlag 1955, Seite 97-98 sind mechanische Dämpfungselemente dargestellt, welche mittels eines Zwischengliedes auf einen Rotor wirken. Diese sind jedoch in axialer Richtung nicht fixiert. Für Rotoren, bei denen es auf die Einhaltung minimaler, axialer Toleranzen ankommt, sind solche Dämpfungselemente nicht geeignet. Andere konventionelle Lösungen benötigen Zwischenglieder bei relativ großer Masse, die die Dämpfungseigenschaften negativ beeinflußt. Bekannt sind auch mechanische Dämpfungseinrichtungen, welche flüssigkeitsgefüllte Bauteile aufweisen. Schlechte Dämpfungseigenschaften und Unzuverlässigkeit im Betrieb beeinträchtigen die Einsatzmöglichkeit. Kompliziertere Konstruktionen, wie in der Gattungsgemässen DE-OS 32 39 328 oder solche, bei denen eine aufwendige Zentrierung des Zwischengliedes notwendig ist, stellen keine vorteilhaften Lösungen dar.

Die Erfindung hat sich zur Aufgabe gestellt, einen magnetisch gelagerten Rotor mit einer Dämpfungseinrichtung vorzustellen, bei welcher die vorgenannten Nachteile nicht auftreten. Insbesondere soll eine mechanische Einrichtung entwickelt werden, bei der die Dämpfung über ein Zwischenglied erfolgt. Das Zwischenglied muß axial fixiert und radial beweglich sein. Dabei soll eine komplizierte Konstruktion vermieden, geometrische Ausdehnung und Maße in Grenzen gehalten und eine einfache Zentrierung erreicht werden. Zusätzliche Bauteile zur Dämpfung sollen vermieden werden.

Die Aufgabe wird durch die kennzeichnenden Merkmale des 1 bzw. 2 Patentanspruches gelöst. Die Ansprüche 3 bis 6 stellen weitere Ausgestaltungsformen der Erfindung dar.

Die Lagerung des Zwischengliedes auf Kugeln, die sowohl im Gehäuse als auch im Zwischenglied selbst in Kalotten liegen, erlaubt es, den Rotor axial zu fixieren und radiale Auslenkungen zu dämpfen. Das axiale Lager wird in einer solchen Position betrieben, daß eine axiale Kraft zur Verfügung steht, die die Kugeln bei radialer Auslenkung zu einer Zentrierung in den Kalotten zwingt. Dies erlaubt eine einfache Konstruktion des Zwischengliedes. Die Zentrierung geschieht ohne Justage durch direktes Aufsetzen auf die Kugeln. Zur Vereinfachung der Fertigung können die Kalotten eine kugelförmige Oberfläche aufweisen. Ansonsten sind beliebige Oberflächenformen, je nach Anforderung der Lager- und Dämpfungseigenschaften, möglich.

Der herausragende Vorteil der Erfindung ist, daß die Dämpfung direkt in die Lagerelemente integriert ist. Dadurch, daß die Kugeln aus elastisch verformbarem Material hergestellt sind, sind sie in der Lage, Energie aufzunehmen, die durch Schwingunen entsteht, und wirken so als Dämpfungselemente. Dabei muß darauf geachtet werden, daß die Belastung der Kugeln im elastischen Bereich des Materials bleibt. Die axiale Steifigkeit, welche groß gegenüber der radialen Steifigkeit sein muß, wird durch eine genügend große Anzahl von Kugeln erreicht. Dadurch wird auch die Flächenbelastung der einzelnen Kugeln klein gehalten und somit der Rollwiderstand minimiert. Zusätzliche Dämpfungsglieder sind nicht notwendig, können jedoch im Falle extremer Betriebsbedingungen angebracht werden. In einer weiteren Ausführungsform des Zwischengliedes und seiner Lagerung werden die Oberflächen der Kalotten aus elastisch verformbarem Material gestaltet. Die Kugeln können dann aus Metall hergestellt sein.

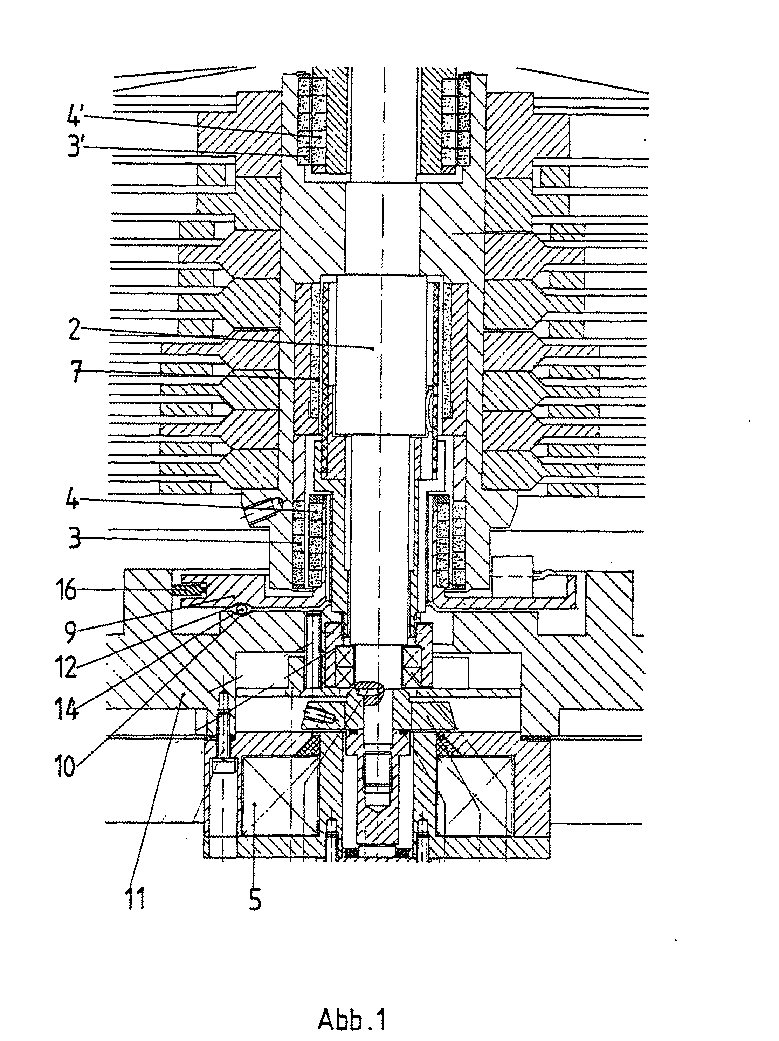

An Hand der Abbildungen 1 und bis 3 soll die Erfindung an einem Beispiel näher erläutert werden.

Abbildung 1 zeigt ein Ausführungsbeispiel der erfindungsgemäßen Anordnung, angewandt bei einer Turbomolekularpumpe.

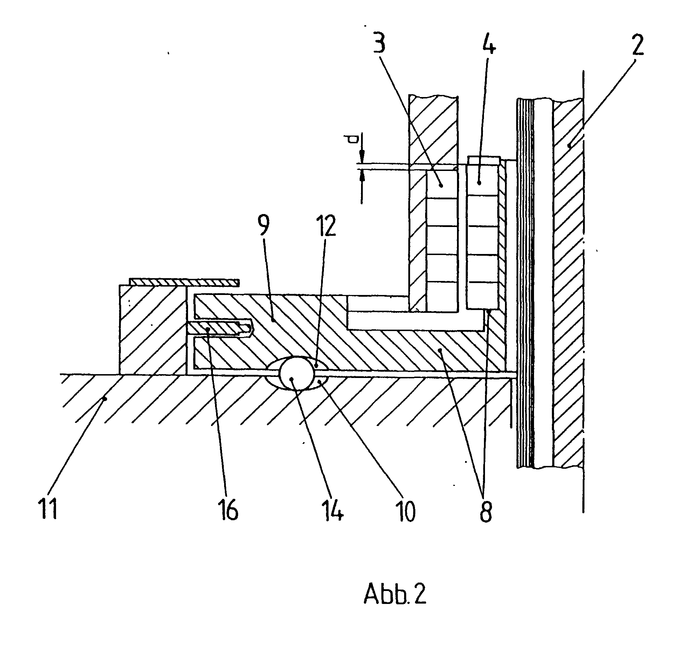

Abbildung 2 zeigt einen Ausschnitt aus Abbildung 1 mit der erfindungsgemäßen Anordnung in vergrößerter Darstellung.

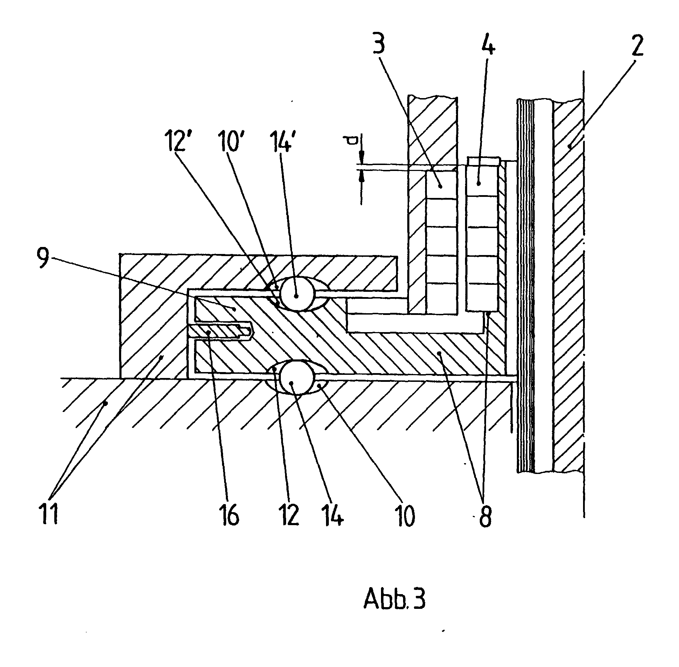

Abbildung 3 zeigt die erfindungsgemäße Anordnung auf Kugeln und Kalotten beidseitig des Zwischengliedes

Abbildung 1 beschreibt die Erfindung am Beispiel einer Turbomolekularpumpe. Die Lagerung des Rotors 2 erfolgt in diesem Beispiel durch eine einachsig aktiv geregelte Magnetlageranordnung, bestehend aus einem passiven Radiallager und einem aktiven Axiallager. Das passive Radiallager besteht aus zwei Teilen, die jeweils eine Rotormagnetanordnung 3.3' und eine Statormagnetanordnung 4,4' aufweisen. Das aktive Axiallager wird durch die Spule 5 eines Elektromagneten symbolisiert. Die Antriebsanordnung ist mit 7 bezeichnet.

Die Dämpfung zwischen dem Rotor 2 und einem gehäusefesten Teil 11 erfolgt über ein Zwischenglied 8. Dieses besteht aus dem Statormagneten 4 des unteren passiven Radiallagers und einer Plattform 9. Das Zwischenglied 8 ist an den Rotor über die Statormagnete 4 und die Rotormagnete 3 des unteren passiven Radiallagers gekoppelt. Die Verbindung des Zwischengliedes mit dem gehäusefesten Teil 11 besteht über Kugeln 14. Diese Kugeln liegen in Kalotten 10, 12, welche sich im gehäusefesten Teil 11 bzw. in der Plattform 9 befinden und sind erfindungsgemäß aus elastisch verformbarem Material, dessen Elastizitätsmodul klein ist gegenüber demjenigen von Metallen, hergestellt, so daß die Dämpfung direkt in die Lagerelemente integriert ist. In einer weiteren Ausführungsform sind die Oberflächen der Kalotten aus elastisch verformbarem Material hergestellt und die Kugeln können aus Metall bestehen. Außerdem kann das Zwischenglied über Dämpfungselemente 16 an das gehäusefeste Teil 11 angekoppelt sein.

Durch einen Versatz zwischen Rotormagneten 3 und Statormagneten 4 um die Größe d wirkt eine axiale Kraft auf das Zwischenglied 9. Dadurch wird dieses gegen die Kugeln 14 und somit gegen das gehäusefeste Teil gedrückt. Der Rotor 2 wird durch einen geregelten Elektromagneten axial in seiner Sollposition gehalten. Erfolgt eine radiale Auslenkung des Rotors aus seiner Sollposition, dann wird auch das Zwischenglied 8 wegen der Ankopplung über die Rotor- und Statormagnete 3 und 4 des unteren passiven Radiallagers radial ausgelenkt. Dadurch, daß das Zwischenglied auf Kugeln 14 gelagert ist und diese sowohl im gehäusefesten Teil 11 als auch im Zwischenglied selbst in Kalotten 10 und 12 liegen, entsteht bei radialer Auslenkung aus der zentrierten Position eine Rückstellkraft, welche von der Differenz der Kugeln- und Kalottenradien sowie von der Größe der Auslenkung abhängig ist. Um den Rotor in beiden axialen Richtungen zu fixieren, kann zusätzlich auf der gegenüberliegenden Seite des Zwischengliedes die gleiche Anordnung mit Kugeln 14' und Kalotten 12' und 10' vorhanden sein. Durch die zusätzlichen Dämpfungsglieder 16 können radiale Bewegungen des Zwischengliedes 18 gedämpft werden. Somit werden auch durch die Kopplung über das passive radiale Magnetlager 3, 4 die radialen Bewegungen des Rotors gedämpft. Bei kleinen Auslenkungen ist die Axialbewegung des Zwischengliedes gegenüber der radialen Auslenkung vernachlässigbar klein. Dazu muß die axiale Steifigkeit groß gegenüber der radialen Steifigkeit sein. Das wird durch eine genügend große Anzahl von Kugeln erreicht.

## Patentansprüche

1. Magnetisch gelagerten Rotor mit einer Dämpfungseinrichtung, wobei die Magnetlagerung aus mindestens einem radialen Magnetlager (3, 4) besteht und der Stator (4) des radialen Magnetlagers mit einem Zwischenglied (8) fest verbunden ist, **dadurch gekennzeichnet, daß** das Zwischenglied (8) in axialer Richtung über Kugeln (14), welche in Kalotten (12) des Zwischengliedes und in Kalotten (10) eines gehäusefesten Teiles (11) liegen, mit dem gehäusefesten Teil verbunden ist, daß die Durchmesser der Kalotten größer sind als der Durchmesser der Kugeln und daß die Kugeln aus elastisch verformbarem Material, dessen Elastizitätsmodul klein ist gegenüber demjenigen von Metallen, bestehen.

2. Magnetisch gelagerten Rotor mit einer Dämpfungseinrichtung, wobei die Magnetlagerung aus mindestens einem radialen Magnetlager (3, 4) besteht und der Stator (4) des radialen Magnetlagers mit einem Zwischenglied (8) fest verbunden ist, **dadurch gekennzeichnet, daß** das Zwischenglied (8) in axialer Richtung über Kugeln (14), welche in Kalotten (12) des Zwischengliedes und in Kalotten (10) eines gehäusefesten Teiles (11) liegen, mit dem gehäusefesten Teil verbunden ist, daß die Durchmesser der Kalotten größer sind als der Durchmesser der Kugeln und daß die Oberfläche der Kalotten aus elastisch verformbarem Material, dessen Elastizitätsmodul klein ist gegenüber demjenigen von Metallen, bestehen.

3. Magnetisch gelagerten Rotor nach Anspruch 1 oder 2, **dadurch gekennzeichnet, daß** das Zwischenglied in radialer Richtung über zusätzliche Dämpfungsglieder (16) mit dem gehäusefesten Teil (11) verbunden ist.

4. Magnetisch gelagerten Rotor nach einem der vorangehenden Ansprüche, **dadurch gekennzeichnet, daß** das Zwischenglied (8) in axialer Richtung zusätzlich auf der gegenüberliegenden Seite über Kugeln (14'), welche in Kalotten (12') des Zwischengliedes und in Kalotten (10') des gehäusefesten Teil liegen, mit dem gehäusefesten Teil verbunden ist.

5. Magnetisch gelagerten Rotor nach einen der vorhergehenden Ansprüche, **dadurch gekennzeichnet, daß** die Kalotten (10, 12) eine kugelförmige Oberfläche aufweisen.

6. Magnetisch gelagerten Rotor nach einem der vorangehenden Ansprüche, **dadurch gekennzeichnet, daß** die Anzahl der Kugeln so gewählt wird, daß die axiale Steifigkeit groß ist gegenüber der radialen Steifigkeit.

## Claims

1. Magnetically supported rotor having a damping device, wherein the magnetic support comprises at least one radial magnetic bearing (3, 4) and the stator (4) of the radial magnetic bearing is connected in a fixed manner to an intermediate element (8), **characterized in that** the intermediate element (8) is connected in axial direction by balls (14), which are situated in cup elements (12) of the intermediate element and in cup elements (10) of a housing-fixed part (11), to the housing-fixed part, that the diameters of the cup elements are greater than the diameter of the balls and that the balls are made of elastically deformable material, the modulus of elasticity of which is low compared to that of metals.

2. Magnetically supported rotor having a damping device, wherein the magnetic support comprises at least one radial magnetic bearing (3, 4) and the stator (4) of the radial magnetic bearing is connected in a fixed manner to an intermediate element (8), **characterized in that** the intermediate element (8) is connected in axial direction by balls (14), which are situated in cup elements (12) of the intermediate element and in cup elements (10) of a housing-fixed part (11), to the housing-fixed part, that the diameters of the cup elements are greater than the diameter of the balls and that the surface of the cup elements are made of elastically deformable material, the modulus of elasticity of which is low compared to that of metals.

3. Magnetically supported rotor according to claim 1 or 2, **characterized in that** the intermediate element is connected in radial direction by additional damping elements (16) to the housing-fixed part (11).

4. Magnetically supported rotor according to one of the preceding claims, **characterized in that** the intermediate element (8) is connected in axial direction additionally at the opposite side by balls (14'), which are situated in cup elements (12') of the intermediate element and in cup elements (10') of the housing-fixed part, to the housing-fixed part.

5. Magnetically supported rotor according to one of the preceding claims, **characterized in that** the cup elements (10, 12) have a spherical surface.

6. Magnetically supported rotor according to one of the preceding claims, **characterized in that** the number of balls is so selected that the axial stiffness is high compared to the radial stiffness.

## Revendications

1. Rotor à suspension magnétique à dispositif d'amortissement, dans lequel l'ensemble de palier magnétique se compose d'au moins un palier magnétique radial (3, 4) et le stator (4) du palier magnétique radial est connecté de façon fixe à un élément intermédiaire (8), **caractérisé en ce que** l'élément intermédiaire (8) est connecté avec les éléments fixes sur le carter en direction axiale au moyen de billes (14) qui sont disposées dans des calottes (12) de l'élément intermédiaire et dans des calottes (10) d'un élément (11) fixe par rapport au boîtier, **en ce que** les diamètres des calottes sont plus grands que les diamètres des billes et **en ce que** les billes sont en une matière déformable élastiquement dont le module d'élasticité est faible par rapport à celui des métaux.

2. Rotor à suspension magnétique à dispositif d'amortissement, dans lequel l'ensemble de palier magnétique se compose d'au moins un palier magnétique radial (3, 4) et le stator (4) du palier magnétique radial est connecté de façon fixe à un élément intermédiaire (8), **caractérisé en ce que** l'élément intermédiaire (8) est connecté avec les éléments fixes sur le carter en direction axiale au moyen de billes (14) qui sont disposées dans des calottes (12) de l'élément intermédiaire et dans des calottes (10) d'un élément (11) fixe par rapport au boîtier, **en ce que** les diamètres des calottes sont plus grands que les diamètres des billes et **en ce que** la surface des calottes est en une matière déformable élastiquement, dont le module d'élasticité est faible par rapport à celui des métaux.

3. Rotor à suspension magnétique selon la revendication 1 ou 2, **caractérisé en ce que** l'élément intermédiaire est connecté en direction radiale à l'élément (11) fixe par rapport au boîtier au moyen d'éléments additionnels d'amortissement (16).

4. Rotor à suspension magnétique selon l'une quelconque des revendications précédentes, **caractérisé en ce que** l'élément intermédiaire (8) est en outre connecté en direction axiale sur le côté opposé au moyens de bittes (14') qui sont disposées dans des calottes (12') de l'élément intermédiaire et des calottes (10') de l'élément fixe sur le boîtier.

5. Rotor à suspension magnétique selon l'une quelconque des revendications précédentes, **caractérisé en ce que** la surface des calottes (10, 12) est sphérique.

6. Rotor à suspension magnétique selon l'une quelconque des revendications précédentes **caractérisé en ce que** le nombre des billes est choisi d'une manière telle que la rigidité axiale est grande par rapport à la rigidité radiale.
